# EUROPÄISCHE PATENTANMELDUNG

(11) **EP 3 895 777 A1**
(43) Veröffentlichungstag der Anmeldung: **20.10.2021**
(21) Anmeldenummer: 21166973.4
(22) Anmeldetag: 06.04.2021
(51) Int. Cl.: B01D 29/23, B01D 29/82

(54) **FILTERPRESSE**

(30) Priorität: 14.04.2020 DE 102020110177
(71) Anmelder: Berthold, Jürgen, 90542 Eckental (DE)
(72) Erfinder: Berthold, Jürgen, 90542 Eckental (DE); Berthold, Hermann, 91338 Igensdorf (DE)
(74) Vertreter: Lindner Blaumeier Patent- und Rechtsanwälte

(57) **Zusammenfassung**

Filterpresse, umfassend ein eine abzutrennende Partikel (46) enthaltende, zu filtrierende Flüssigkeit aufnehmendes Gehäuse (2) sowie eine im Gehäuse angeordnete Presseinrichtung (4) zum Durchpressen der Flüssigkeit durch eine Filtereinrichtung (3), wobei die um eine vertikale Achse (9) rotierende Presseinrichtung (4) wenigstens ein um eine, zur vertikalen Achse (9) unter einem Winkel stehende, Drehachse (20) rotierendes, im Querschnitt rundes Presselement (5) mit einem aus einem elastischen Material gebildeten Außenmantel (18) aufweist, mit dem das Presselement (5) auf der Filtereinrichtung (3) abrollt, wobei die Filtereinrichtung (3) ein Filtermittel (39) sowie eine dem Filtermittel (39) vorgeschaltete, mehrere zum Presselement (5) hin offene Durchbrechungen (38) aufweisende Filterplatte (37) umfasst, von denen jede einen sich zum Filtermittel (39) hin reduzierenden Querschnitt aufweist.

## Beschreibung

Die Erfindung betrifft eine Filterpresse, umfassend ein eine abzutrennende Partikel enthaltende, zu filtrierende Flüssigkeit aufnehmendes Gehäuse sowie eine im Gehäuse angeordnete Presseinrichtung zum Durchpressen der Flüssigkeit durch eine Filtereinrichtung.

Mit Partikeln beladene Flüssigkeiten fallen in unterschiedlichen Arbeits- oder Wirtschaftsbereichen an. Eine solche Flüssigkeit enthält Feststoffpartikel, seinen es größere Partikel oder Schwebstoffe, die abzutrennen sind, um die filtrierte Flüssigkeit entweder für eine weitere, tiefergehende Reinigung weiter zu prozessieren, oder um die Flüssigkeit weiter zu verwenden. Ein Beispiel für eine solche Flüssigkeit ist beispielsweise beladenes Wasser, das mit Fermenterabfällen versetzt aus einer Biogasanlage stammt, Maissilage, und anderweitig beladenes oder verschmutztes Wasser, das mit organischen Abfällen wie Fäkalien, Stroh, Gras etc. beladen ist. Ein derartig beladenes Wasser wird oft auch allgemein als "Gülle" bezeichnet. Da eine derartige Flüssigkeit respektive "Gülle" noch mit relativ groben Schmutzpartikeln beladen ist, kann sie mit einer Filterpresse filtriert werden, um einen Großteil der enthaltenen Schmutzpartikel abzufiltrieren. Dieser Filterschritt kann entweder ein erster Schritt innerhalb einer weitergehenden Reinigungskette sein, oder ein singulärer Filterschritt, wenn das gefilterte Wasser je nach Weiterverwendungszweck entsprechend ausreichend gereinigt ist. Eine solche Filterpresse umfasst ein Gehäuse, in das die zu filtrierende Flüssigkeit eingebracht, üblicherweise über eine Rohrleitung eingepumpt wird. Im Gehäuse ist eine Filtereinrichtung vorgesehen, der eine Presseinrichtung zugeordnet ist. Das mit den Partikeln beladene, verschmutzte Wasser steht oberhalb der Filtereinrichtung. Die Presseinrichtung drückt das beladene Wasser durch die Filtereinrichtung, wobei in der Filtereinrichtung die Schmutzpartikel, je nach der gegebenen Siebgröße der Filtereinrichtung, hängen bleiben und damit von der die Filtereinrichtung passierenden Flüssigkeit abgetrennt werden.

Eine solche Filterpresse arbeitet diskontinuierlich. Als Filtereinrichtung kommen zumeist mehrlagig gestapelte Filtertücher oder Membranen zum Einsatz.

Der Durchsatz über die Zeit durch eine Filterpresse ist nicht allzu hoch, da es sich um einen diskontinuierlich arbeitenden Druckfilter handelt, in den eine bestimmte Menge an beladenem Wasser, also der Suspension eingebracht wird, wonach diese bestimmte Menge gefiltert wird. Erst dann kann nach Entfernung der abgetrennten Partikel respektive des Filterkuchens die Filterpresse erneut beschickt werden.

Der Erfindung liegt damit das Problem zugrunde, eine demgegenüber verbesserte Filterpresse anzugeben.

Zur Lösung dieses Problems ist bei einer Filterpresse der eingangs genannten Art erfindungsgemäße vorgesehen, dass die um eine vertikale Achse rotierende Presseinrichtung wenigstens ein um eine, zur vertikalen Achse unter einem Winkel stehende, Drehachse rotierendes, im Querschnitt rundes Presselement mit einem aus einem elastischen Material gebildeten Außenmantel aufweist, mit dem das Presselement auf der Filtereinrichtung abrollt, wobei die Filtereinrichtung ein Filtermittel sowie eine dem Filtermittel vorgeschaltete, mehrere zum Presselement hin offene Durchbrechungen aufweisende Filterplatte umfasst, von denen jede einen sich zum Filtermittel hin reduzierenden Querschnitt aufweist.

Die erfindungsgemäße Filterpresse zeichnet sich durch ein Presselement aus, das um zwei Achsen drehbar ist. Zum einen ist das Presselement um eine zentrale, vertikal stehende Drehachse drehbar. Es erstreckt sich unter einem Winkel von der Drehachse weg, so dass es bei einer Rotation der Drehachse eine 360°-Drehung vollzieht. Darüber hinaus ist die Presseinrichtung selbst um eine zweite, zur vertikalen Achse unter einem Winkel stehende Drehachse drehbar. Das heißt, dass sich das Presselement während einer 360°-Rotation um die vertikale Achse auch mehrfach um sich selbst dreht.

Das Presselement selbst ist rund, also walzenförmig und weist einen Außenmantel aus einem elastischen Material auf. Mit diesem Außenmantel wälzt es während einer 360°-Drehung auf der Filtereinrichtung ab, wobei es mit einem entsprechenden Druck, also vorgespannt, mit dem elastischen Außenmantel an der Filtereinrichtung anliegt. Die Filtereinrichtung selbst weist ein Filtermittel auf, das über den Durchmesser der Filter- oder Sieböffnungen definiert, welche maximale Größe ein Partikel haben kann, um durch das Filtermittel zu gelangen und welche Partikel zurückgehalten werden. Diesem Filtermittel, beispielsweise ein Lochfilter aus einem dünnen perforierten Filterblech oder einer perforierten, vorzugsweise reißfesten Kunststofffolie, ist zum Presselement hin vorgeschaltet eine Filterplatte zugeordnet, die eine Vielzahl zum Presselement hin offenen Durchbrechungen aufweist. Die Durchbrechungen ändern ihren Querschnitt, gesehen vom Presselement zum Filtermittel, wobei sich der Durchbrechungsquerschnitt in dieser Richtung reduziert, das heißt, dass die Querschnittsfläche zum Filtermittel hin abnimmt.

Rotiert nun die Presseinrichtung um die vertikale Achse, so wälzt die hierdurch umlaufende Presseinrichtung mit dem elastischen Außenmantel auf der Filterplatte ab und dreht sich dabei um sich selbst. Während dieser Drehbewegung drückt der elastische Außenmantel gegen die Filterplatte und wird dabei deformiert. Gleichzeitig drückt der Außenmantel aber auch die mit den Partikeln beladene Flüssigkeit in die Durchbrechungen der Filterplatte, die sich wie beschrieben zum Filtermittel hin verjüngen. Hierdurch und durch den Umstand, dass es sich um einen elastischen Außenmantel handelt, wird innerhalb der sich beim Überrollen schließenden Durchbrechung zunehmend der Druck erhöht, was dazu führt, dass die Flüssigkeit und feine, das Filtermittel passierende Partikel durch das Filtermittel gepresst werden, während gleichzeitig größere Partikel in der Durchbrechung vom Filtermittel zurückgehalten werden. Durch die Druckerhöhung innerhalb der jeweiligen Durchbrechung, resultierend aus dem Umstand, dass sich das elastische Material in die Durchbrechung eindrückt, wird also die Flüssigkeit aus der Durchbrechung gepresst, zurückbleiben die abgetrennten Partikel. Es bildet sich demzufolge ein Filterkuchen aus den zusammengepressten, abgetrennten Partikeln.

Rollt nun das Presselement weiter, so öffnet sich die Durchbrechung wieder. Die ausgepressten Partikel respektive der Filterkuchen haftet an dem elastischen Außenmantel und wird beim Wegdrehen des Presselements aus der Durchbrechung mitgenommen und aus der Durchbrechung bewegt, wobei dies durch den sich ergebenden, abnehmenden Druck aufgrund des sich entfernenden respektive aus der Durchbrechung gezogenen Materials unterstützt wird. Der zusammengepresste Filterkuchen wird also beim Wegrollen des Presselements automatisch aus der Durchbrechung gezogen respektive gesaugt. Der Filterkuchen löst sich bei fortgesetzter Bewegung des Presselements vom elastischen Außenmantel und schwimmt in der mit Partikeln beladenen Flüssigkeit, wobei der Filterkuchen, resultierend auf Grund seines Gewichts, absinkt und zu einem Auffang- oder Sammelbereich gelangt, von wo aus er als Dickschlamm dann abgezogen werden kann. Das durchgepresste, gefilterte Wasser sammelt sich gleichermaßen in einem entsprechenden Sammelbereich, von wo aus es abgezogen werden kann.

Die erfindungsgemäße Filterpresse ermöglicht einen nahezu kontinuierlichen Betrieb resultierend aus dem rotativen Pressverfahren mit gleichzeitiger Selbstreinigung der Filtereinrichtung. Das heißt, dass es möglich ist, quasi kontinuierlich dem Gehäuse beladene Flüssigkeit nachzuführen und kontinuierlich gefilterte Flüssigkeit abzuziehen und bei Gelegenheit die sich ansammelnden Filterkuchen bzw. den Dickschlamm zu entleeren.

Die Durchbrechungen sind im Querschnitt bevorzugt rund, was sich bezüglich des Herausziehens respektive Heraussaugens der verpressten Filterkuchen als vorteilhaft erwiesen hat. Unter rund ist dabei nicht zwingend kreisrund zu verstehen, vielmehr ist auch eine leicht elliptische Querschnittsform denkbar.

Wie beschrieben, nimmt der Durchbrechungsquerschnitt von der zum Presselement weisenden Plattenseite zu der zum Filtermittel weisenden Plattenseite hin ab. er reduziert sich bevorzugt kontinuierlich. Bevorzugt haben dabei die Durchbrechungen einen Öffnungswinkel zwischen 60° - 120°, insbesondere zwischen 75° und 105° und vorzugsweise von 90°. Dabei sollten die Durchbrechungen einen maximalen Durchmesser von 12 mm, insbesondere von 10 mm und vorzugsweise von 8 mm und einen minimalen Durchmesser von 8 mm, insbesondere von 6 mm und vorzugsweise von 5 mm aufweisen. Die besonders bevorzugte Ausgestaltung ist mit einem maximalen Durchmesser von 8 mm und einem minimalen Durchmesser von 5 mm. Das heißt, dass ein maximaler Durchbrechungsquerschnitt von ca. 50,2 mm² und ein minimaler Durchbrechungsquerschnitt von ca. 19,6 mm² gegeben ist. Der Durchmesser kann aber auch innerhalb der angegebenen Intervallgrenzen etwas größer sein.

Die Filtereinrichtung weist wie beschrieben ein Filtermittel sowie eine zwischen Filtermittel und Presselement angeordnete Filterplatte auf, wobei das Filtermittel bevorzugt unmittelbar an der Unterseite der Filterplatte, an dieser anliegend, angeordnet ist. Um dieses Filtermittel auch zur anderen Seite hin zu lagern respektive abzustützen, sieht eine vorteilhafte Weiterbildung der Erfindung vor, dass die Filtereinrichtung eine dem Filtermittel nachgeschaltete zweite Filterplatte mit, mit den Durchbrechungen der ersten Filterplatte fluchtenden, zweiten Durchbrechungen aufweist. Das heißt, dass im einfachsten Fall quasi eine dreilagige Struktur der Filtereinrichtung vorgesehen ist, nämlich die obere erste Filterplatte, das Filtermittel und die untere zweite Filterplatte. Die zweite Filterplatte weist ebenfalls Durchbrechungen auf, die mit denen der ersten Filterplatte fluchten. Dabei muss der Durchmesser respektive die Querschnittsfläche der Durchbrechungen der zweiten Filterplatte nicht dem minimalen Durchmesser respektive dem minimalen Querschnitt der ersten Filterplatte entsprechen, er kann auch etwas größer sein. Bevorzugt jedoch entspricht der Querschnitt der zweiten Durchbrechungen, die bevorzugt als runde Bohrungen ausgeführt sind, dem minimalen Querschnitt der ersten Durchbrechungen, weist also z. B. bevorzugt ebenfalls einen Durchmesser von 5 mm respektive eine Querschnittsfläche von 19,6 mm² auf.

Das Filtermittel selbst ist beziehungsweise umfasst bevorzugt einen Lochfilter mit einem Lochquerschnitt zwischen 1 - 50µm, insbesondere zwischen 1 - 25µm. Ein solcher Lochfilter, der bevorzugt als Filterblech ausgeführt ist, kann über seine Fläche mit einer Vielzahl entsprechender Löcher perforiert werden, wobei diese Löcher auch mit kleinstem Durchmesser erzeugt werden können, so dass demzufolge ein äußerst feinmaschiger Lochfilter eingesetzt werden kann. Dieser Lochfilter respektive dieses Filterblech kann allein das Filtermittel bilden, das heißt, dass zwischen den beiden Filterplatten nur der Lochfilter respektive das Filterblech angeordnet ist. Denkbar ist es aber auch, dem Lochfilter direkt ein Filtervlies nachzuschalten, also zwischen Lochfilter und zweiter Filterplatte ein Filtervlies einzusetzen. Dieses Filtervlies erstreckt sich über die gesamte Fläche und bildet eine Gegendruckschicht, um den Pressdruck innerhalb der Durchbrechung hoch zu halten, sowie eine Verteilschicht zwischen Lochfilter und zweiter Filterplatte, so dass sich die durchgedrückte Flüssigkeit innerhalb dieses Filtervlieses verteilten kann und zu den entsprechenden Durchbrechungen der zweiten Filterplatte strömen und von dort aus abfließen kann. Dies ist zweckmäßig, als über die Fläche der Filtereinrichtung respektive der beiden Filterplatten eine Vielzahl von Durchbrechungen verteilt angeordnet sind, so dass demzufolge die durch mehrere Durchbrechungen der ersten Filterplatte hindurchgedrückte Flüssigkeit nicht nur über die direkt zugeordneten Durchbrechungen der zweiten Filterplatte, sondern auch durch benachbarte Durchbrechungen abfließen kann.

Dem Außenmantel als elastisches Element kommt, wie vorstehend beschrieben, eine zentrale Funktion zu, da er sich deformierend vorgespannt auf der Filtereinrichtung abwälzt und in die überrollten Durchbrechungen hineingedrückt und wieder herausgezogen wird. Der Außenmantel ist daher zweckmäßigerweise ein Belag aus einem Elastomer, einem thermoplastischen Elastomer oder einem Gummi, das heißt, dass letztlich unterschiedliche, jedoch hinreichend elastische Materialien als Außenmantel verwendet werden können, die entsprechend deformiert werden können.

Dabei kann der Außenmantel eine Matte sein, die am Presselement befestigt ist. Diese Matte wird um einen quasi walzenförmigen Träger des Presselements gelegt respektive gespannt und endseitig beispielsweise verschweißt, so dass sich ein geschlossen umlaufender Außenmantel ergibt. Diese Matte wird beispielsweise auf den Außenmantel aufgeklebt, so dass sie dort sicher fixiert ist. Alternativ zur Verwendung einer Matte kann der elastische Außenmantel auch in Form einer Beschichtung ausgebildet sein, das heißt, dass der walzenförmige Träger mit dem elastischen Material entsprechend beschichtet wird, beispielsweise durch Aufspritzen oder Tauchen oder Ähnliches.

Um den Durchsatz zu erhöhen, ist es zweckmäßig, nicht nur ein Presselement vorzusehen, sondern mehrere in Umfangsrichtung versetzt angeordnete Presselemente, die gemeinsam um die vertikale Achse rotieren. Das heißt, es kommen beispielsweise zwei, drei oder vier walzenförmige Presselemente zum Einsatz, die gemeinsam um die vertikale Achse rotieren, also an einem entsprechenden Achsträger angeordnet sind. Zwei Presselemente liegen einander um 180'° versetzt gegenüber, drei Presselemente sind äquidistant um 120° versetzt zueinander angeordnet, während vier Presselemente äquidistant um 90° zueinander angeordnet sind. In jedem Fall erfolgt dann an mehreren Positionen gleichzeitig der entsprechende Durchpressvorgang, das heißt, dass, verglichen mit nur einem Presselement, der Durchsatz bei Verwendung zweier Presselemente verdoppelt, bei Verwendung dreier Presselemente verdreifacht und bei Verwendung vierer Presselemente vervierfacht werden kann.

Das oder jedes Presselement weist zweckmäßigerweise eine kegelstumpfartige Form auf, die ein konstantes Abrollen über die Oberfläche der Filtereinrichtung ermöglicht. Dabei ist zweckmäßigerweise auch die Filtereinrichtung kegelstumpfförmig respektive trichterförmig. Das heißt, dass die Filtereinrichtung ein kegelstumpfförmiger oder trichterförmiger Ring ist, dessen Öffnungswinkel zur Vertikalen beispielsweise 120° beträgt. In einem solchen Fall ist dann natürlich auch die Drehachse des oder der Presselemente entsprechend angestellt, wie auch der Öffnungswinkel bei kegelstumpfförmig ausgeführten Presselementen. Beispielsweise weist das kegelstumpfförmige Presselement einen Öffnungswinkel von 30° auf, so dass die Drehachse, um die das Presselement dreht, bei einem Öffnungswinkel der Filtereinrichtung von 60° in einem Winkel von 45° zur Vertikalen steht.

Die Filtereinrichtung selbst weist zweckmäßigerweise eine mittige Öffnung auf, durch die die vertikale Achse verläuft. Dabei ist besonderes bevorzugt der Öffnung der Filtereinrichtung ein Sammelbehälter für aus komprimierten Partikeln bestehende Filterkuchen bzw. den Dickschlamm nachgeschaltet. Wie beschrieben werden die zusammengepressten Filterkuchen vom abrollenden elastischen Außenmantel quasi aus den Durchbrechungen herausgezogen respektive herausgesaugt. Sie lösen sich bei fortschreitender Umdrehung vom Außenmantel und liegen als entsprechend große und schwerere Körper in der verschmutzten Flüssigkeit vor. Sie treiben, nachdem sie durch die rotierende Außenmantelfläche quasi nach oben mitgerissen wurden, in der Flüssigkeit und treiben so in Richtung der Öffnung, durch welche sie in den darunter befindlichen, mit verschmutzter Flüssigkeit befüllten Sammelbehälter gelangen. Dieser Effekt kann insbesondere dadurch unterstützt werden, dass die Filtereinrichtung bevorzugt kegelstumpfförmig respektive trichterförmig ist, sich also von außen gesehen zur mittigen Öffnung hin neigt, so dass die Filterkuchen auch durch die Trichterform der Filtereinrichtung in Richtung der Öffnung treiben respektive in diese auf der Filtereinrichtung rutschen. Die Filterkuchen können von Zeit zu Zeit aus dem Sammelbehälter, der im Gehäuse ist, über eine entsprechende Entnahme- oder Revisionsöffnung entnommen oder abgesaugt werden.

Wie beschrieben rollt der elastische Außenmantel unter Druck auf der Filtereinrichtung ab. Um das Presselement mit dem gewünschten, erforderlichen Druck beaufschlagen zu können, ist zweckmäßigerweise das oder jedes Presselement über eine Spanneinrichtung gegen die Filtereinrichtung gespannt. Diese Spanneinrichtung ist beispielsweise ein hydraulischer oder pneumatischer Zylinder, es kann sich aber auch um einen ein Federelement umfassenden Zylinder handeln, also einen Zylinder mit integrierter Schrauben- oder Druckfeder oder Ähnliches. Bevorzugt ist die Vorspannung einstellbar, das heißt, dass durch entsprechende Einstellung am respektive des Spannelements der Anpressdruck variiert werden kann beziehungsweise die Einstellung derart ausgeführt werden kann, dass der Anpressdruck über die ganze Länge, über die der Außenmantel an der Filtereinrichtung anliegt, gleich ist.

Konstruktiv gesehen ist bevorzugt der oder jeder Zylinder mit einem Ende an einem Halter, an dem das Presselement drehbar gelagert ist, und mit dem anderen Ende an einem mit der Achse gekoppelten Halter befestigt. Die jeweiligen mechanischen Verbindungen sind entsprechende Lageraugen oder Gelenkköpfe, die eine Verschwenkung erlauben, die im Rahmen der Montage erforderlich ist, aber auch gegebenenfalls beim Einstellen des Anpressdrucks.

Die vertikale Achse selbst ist zweckmäßigerweise mittels einer über Lagerelemente drehbar gelagerten Welle gebildet, die mit einem Antriebsmotor gekoppelt ist und mit der das oder die Presselemente gekoppelt sind. Diese Welle, die ein- oder mehrteilig sein kann, also aus linear angeordneten, miteinander verbundenen Wellenabschnitten bestehen kann, erstreckt sich demzufolge durch das Gehäuse. Bevorzugt läuft sie mit ihrem oberen Ende aus dem Gehäuse heraus und ist außerhalb des Gehäuses mit dem Antriebsmotor gekoppelt, so dass dies demzufolge nicht im feuchten Gehäuseinneren angeordnet ist. Mit ihrem unteren Ende läuft die Welle bevorzugt in den Sammelbehälter, der wie beschrieben im Anschluss an die mittige Öffnung der Filtereinrichtung angeordnet ist, wobei die Welle im Sammelbehälter drehbar gelagert ist. Die Welle erstreckt sich demzufolge bevorzugt vom oberen Ende, mit dem sie mit dem Antriebsmotor verbunden ist, in das und durch das Gehäuse bis zum unteren Lagerende im Sammelbehälter.

Im Gehäuse selbst können demzufolge bevorzugt drei separate Gehäusebereiche unterschieden werden. Zum einen der obere Gehäusebereich, in den die verschmutzte, zu reinigende Flüssigkeit eingebracht wird. Daneben ein erster unterer Gehäusebereich, nämlich der der Filtereinrichtung nachgeschaltete Sammelbehälter für die gereinigte Flüssigkeit, wobei der obere Gehäusebereich vom unteren Gehäusebereich, also dem Sammelbehälter, über die Filtereinrichtung getrennt ist. Als dritter Gehäusebereich ist ein weiterer unterer Gehäusebereich, nämlich der Sammelbehälter für die Filterkuchen, vorgesehen, der von dem ringförmigen Sammelbehälter für die Flüssigkeit umschlossen ist. Zum Abziehen der gereinigten Flüssigkeit aus dem Flüssigkeits-Sammelbehälter ist ein entsprechender Auslassanschluss vorgesehen, an den eine entsprechende Leitung angeschlossen werden kann, ebenso wie der Filterkuchen-Sammelbehälter über eine an einen Auslassanschluss anschließbare Saugleitung abgesaugt werden kann.

Wie beschrieben ermöglicht die erfindungsgemäße Filterpresse ein nahezu kontinuierliches Arbeiten, das heißt, dass kontinuierlich verschmutzte Flüssigkeit nachgeführt und gereinigte Flüssigkeit abgezogen werden kann, wie von Zeit zu Zeit die Filterkuchen aus dem Sammelbehältnis entnommen oder abgesaugt werden müssen. Lediglich hierzu kann es erforderlich sein, den Betrieb kurzzeitig zu unterbrechen, da das Filterkuchensammelbehältnis mit dem oberen Gehäusebereich, in den das verschmutzte Wasser aufgegeben ist, verbunden ist, demzufolge auch verschmutztes Wasser im Sammelbehältnis ansteht, so dass demzufolge für die Filterkuchenentfernung eine kurzzeitige Entleerung erforderlich ist, wonach aber sofort wieder der Betrieb fortgesetzt werden kann. Bevorzugt wird aber der sich ansammelnde, aus den Filterkuchen gebildete Dickschlamm abgesaugt, so dass keine Betriebsunterbrechung erforderlich ist und ein komplett kontinuierlicher Betrieb möglich ist. Um den Nachführ- und Abzugsvorgang entsprechend zu steuern ist es zweckmäßig, wenn in einem Gehäusebereich oberhalb der Filtereinrichtung eine Füllstandskontrolleinrichtung vorgesehen ist, die es ermöglicht, kontinuierlich den Füllstand des Gehäuses mit verschmutzter Flüssigkeit kontrollieren zu können. Diese Füllstandskontrolleinrichtung kann eine elektronische Füllstandskontrolleinrichtung sein, die auf elektronischem Wege den Füllstand erfasst, und in Abhängigkeit deren Erfassungsergebnis beispielsweise die die Flüssigkeit zuführende Pumpe gesteuert wird. Alternativ kann auch eine rein optische Füllstandskontrolleinrichtung in Form eines Steigrohrs vorgesehen sein.

Alternativ oder zusätzlich ist es auch denkbar, dass in dem die gereinigte Flüssigkeit aufnehmenden Sammelbehälter, der der Filtereinrichtung nachgeschaltet ist, eine Füllstandskontrolleinrichtung, beispielsweise auch ein Steigrohr, vorgesehen ist. Das heißt, dass auch der Füllstand an gereinigter Flüssigkeit überwacht wird, was bevorzugt elektronisch erfolgen kann, so dass wiederum die die Flüssigkeit abziehende Pumpe füllstandsabhängig gesteuert werden kann. Alternativ ist aber auch eine rein optische Füllstandskontrolle über ein Steigrohr denkbar.

Schließlich ist es auch denkbar, dass an oder in dem die Filterkuchen aufnehmenden Sammelbehälter eine Füllstandskontrolleinrichtung vorgesehen ist. Hierüber wird also erfasst, wie voll dieser Sammelbehälter ist, um diesen dann von Zeit zu Zeit zu entleeren.

Weitere Vorteile und Einzelheiten der Erfindung ergeben sich aus den im Folgenden beschriebenen Ausführungsbeispielen sowie anhand der Zeichnung. Dabei zeigen:
- Fig. 1: eine Perspektivansicht der erfindungsgemäßen Filterpresse,
- Fig. 2: eine längsgeschnittene Ansicht der Filterpresse aus Fig. 1,
- Fig. 3: eine vergrößerte Teilansicht unter Darstellung der Presselemente nebst Spanneinrichtungen und Filtereinrichtung,
- Fig. 4: eine vergrößerte Teilansicht zur Darstellung der Winkelverhältnisse,
- Fig. 5: eine Prinzipdarstellung zur Erläuterung des Funktionsprinzips der Filterpresse, und
- Fig. 6: eine Explosionsansicht einer Filtereinrichtung.

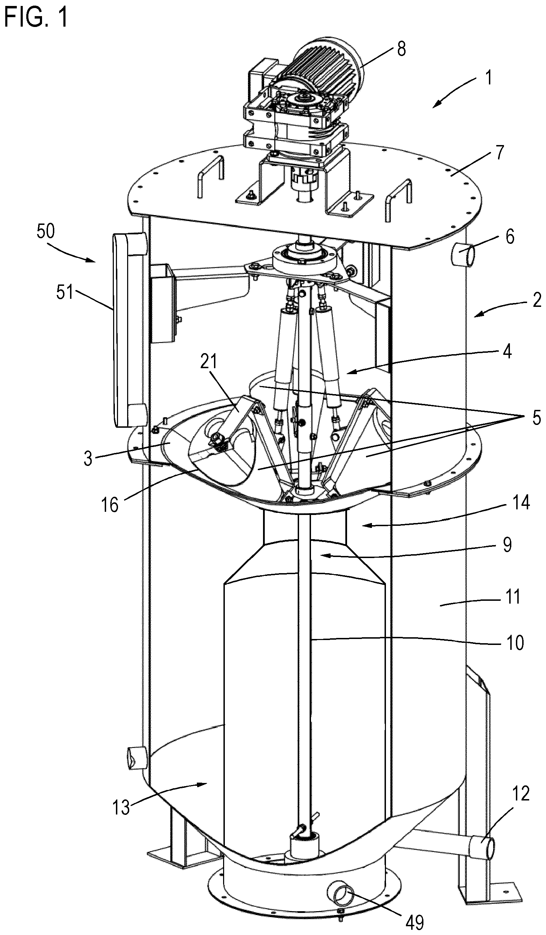

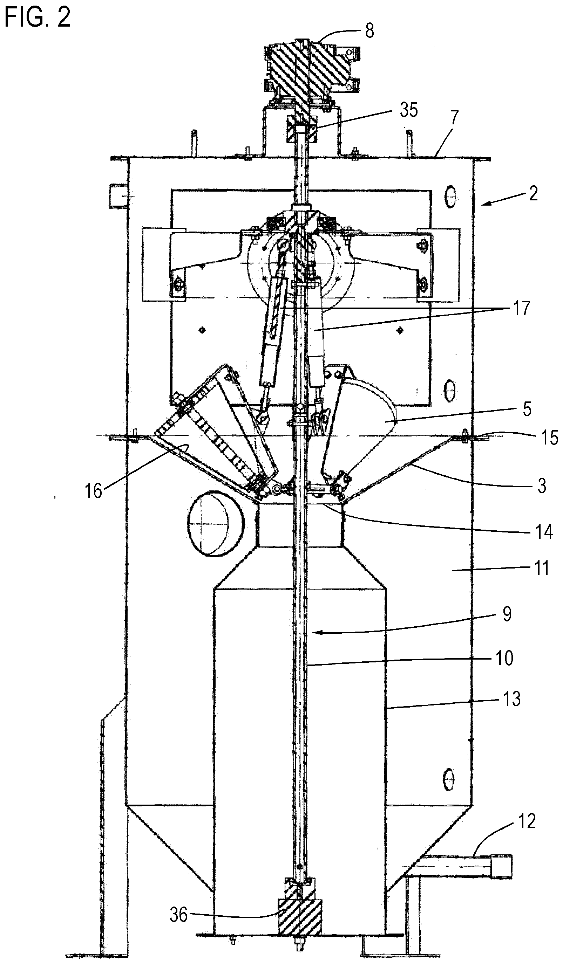

Fig. 1 zeigt eine aufgeschnittene Perspektivansicht einer erfindungsgemäßen Filterpresse 1, umfassend ein Gehäuse 2, in dem eine Filtereinrichtung 3 sowie eine Presseinrichtung 4 umfassend im gezeigten Beispiel drei Presselemente 5 angeordnet ist. Der obere Bereich des Gehäuses 2 ist hier offen gezeigt. In diesem Bereich wird über einen Zulauf 6 mit abzufiltrierenden Partikeln beladene Flüssigkeit, bevorzugt Wasser, zugeführt. Nach oben ist das Gehäuse 2 über einen Deckel 7 geschlossen, auf dem ein Antriebsmotor 8 sitzt, der eine eine vertikale Achse 9 bildende Welle 10 antreibt, mit der die Presselemente 5 verbunden sind. Die Presselemente 5 rollen auf der Filtereinrichtung 3 ab und pressen das Wasser durch die Filtereinrichtung 3, während ein Großteil der Partikel in der Filtereinrichtung 3 hängen bleibt. Das gereinigte Wasser sammelt sich in einem Sammelbehälter 11, siehe auch Fig. 2, welcher Sammelbehälter 11 als Ringraum ausgeführt ist und der Filtereinrichtung 3 nachgeschaltet ist. Über einen Ablauf 12 kann das gereinigte Wasser abgezogen werden.

Im Gehäuseinneren ist es des Weiteren ein Sammelbehälter 13 vorgesehen, der einer mittigen Öffnung 14 der Filtereinrichtung 3 nachgeschaltet ist. In diesem Sammelbehälter 13 sammeln sich ausgepresste Filterkuchen an, die einerseits in der Filtereinrichtung 3 gebildet werden, indem die Presselemente 5 über die Filtereinrichtung rollen, andererseits über diese aber auch aus den Durchbrechungen der Filtereinrichtung 3 wieder herausgesaugt werden, so dass sie sich, in der Flüssigkeit schwebend, im Sammelbehälter 13 sammeln können.

Wie Fig. 2 zeigt, weist die Filtereinrichtung 3 eine Kegelstumpf- oder Trichterform auf. Sie ist über einen Ringflansch 15 gehäuseseitig verschraubt und sitzt mittig auf dem Sammelbehälter 13 auf. Ersichtlich sind auch die Presselemente 5, von denen hier drei vorgesehen sind, die äquidistant um den Umfang der Welle 10 angeordnet sind, kegelstumpfförmig ausgeführt, so dass sie auf der Filtereinrichtung 3 aufliegen. Jedes Presselement 5 umfasst einen hohlen Elementkörper 16, auf den außenseitig ein in den Figuren 1 und 2 nicht näher gezeigter Außenmantel aus einem elastischen Material aufgebracht ist, der nachfolgend noch beschrieben wird.

Um die Presselemente 5 gegen die Filtereinrichtung 3 zu spannen, ist jedes Presselement 5 mit einer Spanneinrichtung 17 gegen die Filtereinrichtung vorgespannt.

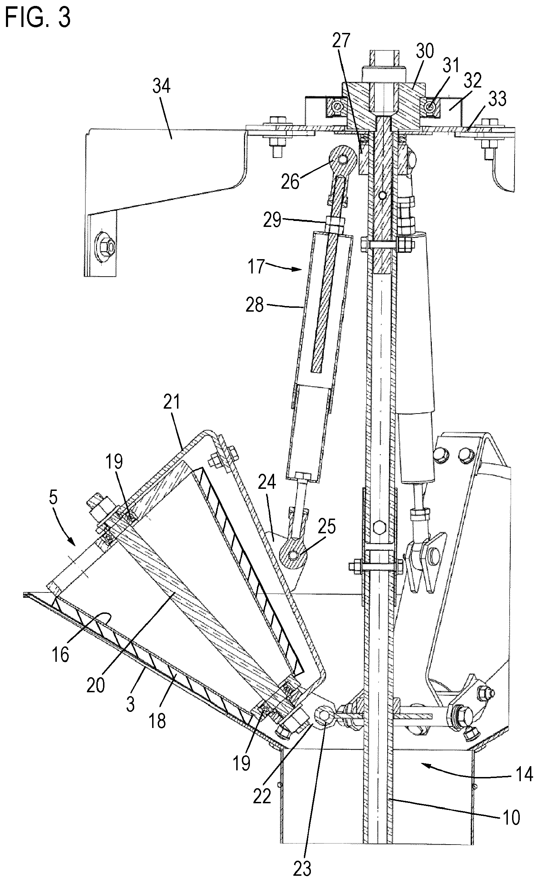

Fig. 3 zeigt in einer vergrößerten Detailansicht den Bereich der Presselemente 5 sowie der Filtereinrichtung 3. Gezeigt ist einerseits die Filtereinrichtung 3, die nachfolgend noch im Detail beschrieben wird, sowie im Detail ein Presselement 5, mit dem Elementkörper 16, auf dem der bereits beschriebene elastische Außenmantel 18 aufgebracht ist. Bei diesem Außenmantel 18 handelt es sich beispielsweise um eine Matte aus einem elastischen Material wie einem Elastomer oder ähnlichem, welche Matte auf den Elementkörper 16 aufgeklebt ist und an den Stoßenden verschweißt ist, so dass sich ein umlaufender geschlossener Außenmantel 18 ergibt. Das Presselement 5 ist über zwei Lagerelemente 19, hier Kugellager, auf einer Welle 20 drehgelagert, die an einem Halter 21 befestigt ist. Dieser quasi klammerartige Halter 21 ist mit seinem unteren Ende über einen Lagerabschnitt 22 schwenkbar an einem Lagerelement 23, das mit der Welle 10 verbunden ist, gekoppelt. Des Weiteren ist der Halter 21 über ein weiteres Lagerelement 24 mit dem Ende 25 einer Spanneinrichtung 17 schwenkbar verbunden, wobei die Spanneinrichtung 17 mit dem anderen Ende 26 ebenfalls an einem entsprechenden Halter 27, der wiederum mit der Welle 10 verbunden ist, gekoppelt und schwenkverbunden ist. Hierüber wird erreicht, dass die entsprechenden Schwenkverbindungen eine Relativbewegung des Presselements 5 ermöglichen, so dass dieses unter Deformation des Außenmantels 18 fest gegen die Filtereinrichtung 3 gedrückt werden kann.

Bei der beziehungsweise jeder Spanneinrichtung 17 handelt es sich um einen Stellzylinder 28, beispielsweise einem hydraulischen oder pneumatischen Zylinder oder einen Zylinder umfassend ein Federelement oder Ähnliches. In jedem Fall kann über diesen Stellzylinder 28, der über eine Verstelleinrichtung 29 in seiner Länge verändert werden kann, so dass der Anpressdruck variiert werden kann, jede Spanneinrichtung 5 entsprechend gegen die Filtereinrichtung 3 gedrückt werden.

Der Halter 27 ist wie beschrieben ebenfalls mit der Welle 10 verbunden. Die Welle 10 ist über einen Lagerblock 30 sowie ein Lagerelement 31 an einem Halter 32, der an einem Trägerblech 33 befestigt ist, das seinerseits wieder über entsprechende Schenkel 34 gehäuseinnenseitig fixiert ist, in diesem Bereich drehgelagert.

Von dort erstreckt sich die Welle 10, siehe Fig. 2, weiter und läuft durch den Deckel 7 des Gehäuses 2, wo sie mit dem Antriebsmotor 8 über ein Verbindungselement 35 drehfest verbunden ist, so dass die Welle 10 und mit ihr die Presselemente 5 um die vertikale Achse 9 gedreht werden können.

Am anderen Ende läuft die Welle 10 durch die Öffnung 14 in den Sammelbehälter 13 ein und ist dort in einem entsprechenden Lagerblock 36 aufgenommen und dort drehgelagert und folglich nach unten abgestützt.

Im Betrieb dreht also der Antriebsmotor 8 die Welle 10, so dass die über die Spanneinrichtung 17 gegen die Filtereinrichtung 3 gespannten Presselemente 5 um die vertikale Achse 9 rotieren. Gleichzeitig wälzen sie mit ihrem elastischen Außenmantel 18 auf der Filtereinrichtung 3 ab. Das heißt, dass jedes Presselement um zwei Achsen rotiert, nämlich zum einen um die vertikale Achse 9, zum anderen um die Achse 20. Hierbei wälzt der elastische Außenmantel 18 auf der Filtereinrichtung 3 ab und presst wie beschrieben eine bestimmte Menge an mit Schmutzpartikeln beladener Flüssigkeit in die entsprechenden Durchbrechungen der Filtereinrichtung 3, wo eine Komprimierung aufgrund des Eindrückens des elastischen Außenmantels 18 stattfindet, so dass einerseits das Wasser durch die Filtereinrichtung 3 gepresst wird und im Sammelbehälter 11 aufgefangen wird, während gleichzeitig in jeder Durchbrechung ein Filterkuchen gebildet wird, der anschließend wieder herausgesaugt wird.

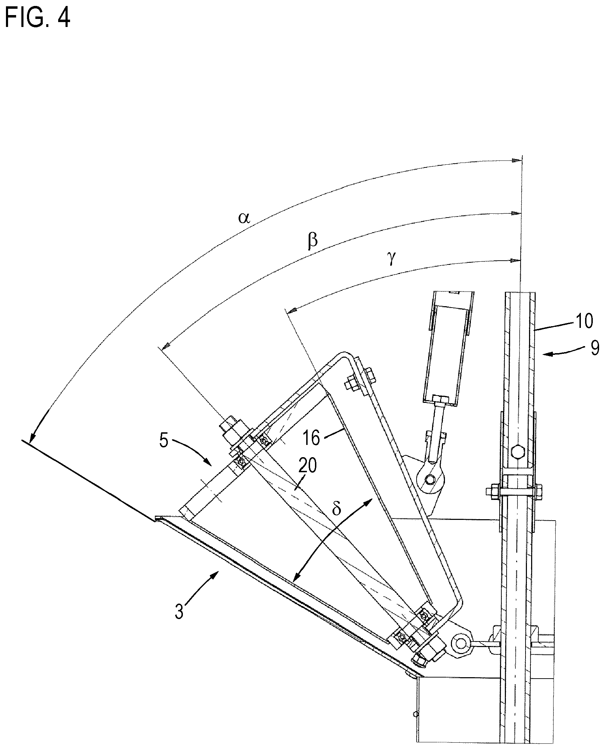

Fig. 4 zeigt in einer vergrößerten Teilansicht die Winkelgeometrie, die die einzelnen Elemente zueinander einnehmen. Gezeigt ist zum einen die Filtereinrichtung 3, zum anderen ein Presselement 5, sowie die vertikale Achse 9 in Form der Welle 10. Die Filtereinrichtung 3, die wie beschrieben trichterförmig ausgeführt ist, weist einen Winkel α von 60° zur vertikalen Achse 9 auf, das heißt, dass die trichterförmige Filtereinrichtung 3 einen Öffnungswinkel von 120° aufweist.

Die Achse 20, um die jedes Presselement 5 rotiert, weist einen Winkel β von 45° zur vertikalen Achse 9 auf.

Das Presselement 5 steht mit seiner näher zur vertikalen Achse 9 liegenden Außenfläche des Elementkörpers 16 unter einem Winkel y von 30° zur vertikalen Achse 9. Da die gegenüberliegende Seite des Elementkörpers 16 parallel zur Filtereinrichtung 3 verläuft, steht demzufolge die dortige Seite unter einem Winkel von ebenfalls 60° zur vertikalen Achse 9, ebenso wie die Filtereinrichtung 3. Hieraus ergibt sich ein Öffnungswinkel δ des kegelstumpfförmigen Elementkörpers 16 von 30°.

Der Umstand, dass die Filtereinrichtung 3 und die benachbarte Seite des Elementkörpers 16 jeweils unter dem gleichen Winkel von 60° zur vertikalen Achse 9 stehen, führt dazu, dass der dazwischen befindliche elastische Außenmantel 18 über die gesamte Auflagelänge nahezu überall gleich komprimiert wird.

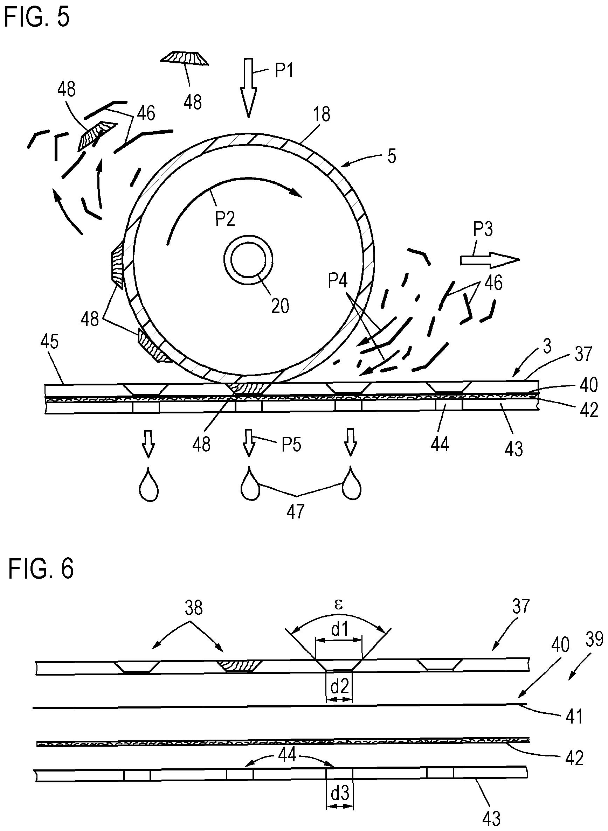

Fig. 5 zeigt in Form einer Prinzipdarstellung den Vorgang des Auspressens. Gezeigt ist hier exemplarisch nur der elastische Außenmantel 18 eines Presselements 5 sowie die Filtereinrichtung 3. Diese Filtereinrichtung 3 besteht, siehe Fig. 6, aus einer ersten Filterplatte 37, die eine Vielzahl an Durchbrechungen 38 aufweist, die im Querschnitt rund sind, also als Kegelbohrungen ausgeführt sind. Der Öffnungswinkel ε beträgt im gezeigten Beispiel 90°. Der größte Durchmesser d1 an der zum elastischen Außenmantel 18 weisenden Seite der Filterplatte 37 beträgt bevorzugt 8 mm, so dass sich eine Querschnittsfläche von ca. 50,2 mm² ergibt. An der gegenüberliegenden Plattenseite beträgt der minimale Durchmesser d2 der Durchbrechung 38 bevorzugt 5 mm, so dass sich ein Öffnungsquerschnitt von ca. 19,6 mm² ergibt.

Der Filterplatte 37 unmittelbar nachgeschaltet, an ihr also anliegend, ist ein Filtermittel 39 umfassend einen Lochfilter 40 in Form eines perforierten Filterblechs 41 oder einer, vorzugsweise reißfesten, perforierten Kunststofffolie bzw. Kunststoff-Lochmembran. Das Filterblech 41 weist eine Vielzahl von Löchern auf, die einen Durchmesser von 1 - 50µm, vorzugsweise zwischen 1 - 25µm, aufweisen. Das heißt, dass diesen Lochfilter 40 nur Partikel passieren können, die kleiner als der Lochquerschnitt ist, so dass demzufolge durch die Filtereinrichtung 3 nur kleinste Partikel noch hindurchtreten können, alle anderen Partikel werden vom Lochfilter 40 zurückgehalten.

Das Filtermittel 39 umfasst des Weiteren ein Filtervlies 42, das der Verteilung des durch den Lochfilter gedrückten Wassers in der Filtervliesebene dient. Neben der Verteilung des Wassers dient das Filtervlies aber insbesondere auch dazu, in gewisser Weise zum Lochfilter 40 hin abzudichten, um von dieser Seite einen gewissen Gegendruck aufbauen zu können, so dass sich innerhalb der Durchbrechung 38 ein hinreichend hoher Pressdruck ausbildet, der einerseits das Wassere durch den Lochfilter 40 und das Filtervlies 42 presst und der andererseits die Partikel 46 zur Bildung des Filterkuchens 48 fest komprimiert.

Dem Filtervlies 42 nachgeschaltet ist schließlich eine zweite Filterplatte 43, die ebenfalls eine Vielzahl von Durchbrechungen 44 aufweist, die mit den Durchbrechungen 38 der ersten Filterplatte 37 fluchten. Die Durchbrechungen 44 weisen einen Durchmesser d3 auf, der bevorzugt dem Durchmesser d2 entspricht, also bevorzugt ebenfalls 5 mm beträgt und daher ebenfalls ein Öffnungsquerschnitt von ca. 19,6 mm² gegeben ist. Die Durchbrechungen 44 sind im Durchmesser nicht kleiner als der minimale Durchmesser der Durchbrechungen 38, sie können aber gegebenenfalls auch etwas größer sein. In jedem Fall kann das durch den Lochfilter 40 gedrückte Wasser, nachdem es auch das Filtervlies 42 passiert hat respektive über dieses verteilt wurde, sodann durch die Durchbrechungen 44 in den Sammelraum 11 abfließen.

Die Funktion der Filterpressung ist in Fig. 5 näher dargestellt. Wie beschrieben drückt der elastische Außenmantel 18, wie durch den Pfeil P1 dargestellt ist, vorgespannt auf die Oberseite 45 der Filtereinrichtung 3. Wie durch den Pfeil P2 dargestellt ist, rotiert das Presselement 5 respektive der Außenmantel 18 einerseits um die Welle 20 und andererseits um die vertikale Achse 9, so dass er sich auch um diese, wie durch den Pfeil P3 dargestellt, bewegt. Er wälzt also auf der Oberseite 45 ab. Hierbei rollt er zwangsläufig über die Durchbrechungen 38. Während eines solchen Überrollens wird einerseits, wie durch die Pfeile P4 gezeigt, Flüssigkeit inklusive der Partikel 46 in eine Stück für Stück überrollte und dabei geschlossene Durchbrechung 38 eingedrückt. Gleichzeitig wird beim Überrollen aber auch ein hinreichend hoher Druck auf die in der Durchbrechung 38 befindliche Flüssigkeit ausgeübt, nicht zuletzt, nachdem sich der elastische Außenmantel 18 geringfügig in die Durchbrechung 38 eindrückt. Hierbei kommt es einerseits dazu, dass die Flüssigkeit mit hohem Druck gegen den Lochfilter 40 gedrückt wird und durch dessen Löcher in das Filtervlies 42 eingedrückt wird, wonach die Flüssigkeit über die Durchbrechung 44 abfließt. Die Flüssigkeit 47 ist anhand der Tropfensymbole dargestellt, die Pfeile P5 zeigen das Abtropfen. Gleichzeitig werden aber die Partikel 46 von dem Lochfilter 40 zurückgehalten, soweit sie größer sind als der entsprechende Lochdurchmesser. Das heißt, dass sich in der sich konisch verjüngenden Durchbrechung 38 ein Filterkuchen 48 bestehend aus fest komprimierten Partikeln 46 ergibt.

Wälzt der Außenmantel 18 nun weiter ab, so rollt er von der Durchbrechung 38, diese öffnet sich kontinuierlich. Hierbei kommt es dazu, dass die einzelnen Filterkuchen 48, die etwas an dem Außenmantel 18 anhaften, mit aus der Durchbrechung 38 herausgezogen respektive herausgesaugt werden, nachdem sich beim Öffnen und Abrollen des Außenmantels 18 das Außenmantelmaterial wieder etwas entspannt. Es kommt dabei zu einem gewissen Saugeffekt, also der Ausbildung eines Unterdrucks, so dass die Filterkuchen 48 herausgesaugt werden. Das heißt, dass sich dadurch eine Selbstreinigung der Filtereinrichtung 3 ergibt, da einerseits die Partikel 46 in die Durchbrechungen eingedrückt und zur Bildung der Filterkuchen 48 stark verpresst werden, andererseits aber die einzelnen Durchbrechungen 38 auch automatisch wieder entleert werden, indem die Filterkuchen 48 herausgezogen respektive herausgesaugt werden.

Die rotierenden Presselemente 5 nehmen die jeweils anhaftenden Filterkuchen 48 mit, diese lösen sich sodann von dem Außenmantel 18 und treiben in der im oberen Behälterbereich befindlichen, verschmutzten Flüssigkeit. Sie sinken in diesem Bereich nach unten und gelangen entweder direkt in die Öffnung 14 oder gleiten entlang der konisch zur Öffnung 14 laufenden Filtereinrichtung 3 in die Öffnung 14 und darüber in den Sammelbehälter 13. Aus diesem können sie bei Bedarf abgezogen werden, wozu entweder der Sammelbehälter 13 geöffnet wird, was mit einem Ablassen des auch im Sammelbehälter 13 anstehenden Schmutzwassers verbunden ist, oder sie können, bevorzugt, über einen entsprechenden Absaugstutzen 49 auch abgesaugt werden, so dass nicht einmal für das Entfernen der abgefilterten Partikel respektive Filterkuchen der kontinuierliche Filterprozess unterbrochen werden muss.

Der elastische Außenmantel 18 ist aus einem hinreichend elastischen Material, bevorzugt einem Elastomer oder einem Gummi. Er ist bevorzugt als Matte aufgebracht, kann aber auch als Beschichtung aufgebracht sein. Seine Dicke ist so bemessen, dass er hinreichend komprimiert werden kann, was erforderlich ist, wie bezüglich Fig. 5 erläutert, um den hinreichenden Druck in der jeweiligen gefüllten Durchbrechung 38 zu erzeugen, so dass das Wasser 47 herausgepresst werden kann und gleichzeitig die Partikel 46 zur Bildung des Filterkuchens 48 komprimiert werden können, wozu sich der elastische Außenmantel 18 in die Durchbrechung 38 einformen muss.

Fig. 1 zeigt schließlich noch eine Füllstandskontrolleinrichtung 50, die dazu dient, den Füllstand an verschmutzter Flüssigkeit im oberen Bereich kontrollieren zu können. Vorgesehen ist hier ein transparentes Schauglas 51, es kann aber auch eine elektronische Füllstandskontrolleinrichtung vorgesehen sein.

Wenngleich nicht näher dargestellt ist, besteht ferner die Möglichkeit, auch eine Füllstandskontrolleinrichtung im Sammelbehälter 11 vorzusehen, um den Füllstand an gereinigtem Wasser in diesem Ringraum zu erfassen. Zusätzlich oder alternativ kann aber auch eine Füllstandskontrolleinrichtung im Sammelbehälter 13 vorhanden sein, um den Füllstand an eingebrachten Filterkuchen 48 respektive gegebenenfalls auch losen Partikeln 46, die sich auch durch ein Auseinanderfallen der Filterkuchen 48 wieder bilden können, zu erfassen.

Je nachdem, welche Filtereinrichtung vorgesehen ist, sofern sie elektronisch ist, kann eine entsprechende Steuerung der zugeordneten Peripheriegeräte erfolgen. Im Falle einer den Füllstand an verschmutzter Flüssigkeit erfassenden elektronischen Flüssigkeitskontrolleinrichtung kann beispielsweise bei Absinken auf einen Mindestfüllstand automatisch eine Zuführpumpe angesteuert werden, so dass hier über den Zulauf das Schmutzwasser nachgeführt werden kann, bis wiederum ein maximaler Füllstand erreicht ist. Im Falle einer elektronischen Füllstandskontrolle des gereinigten Wassers kann mit Erreichen eines maximalen Füllstandes eine Pumpe, die die Flüssigkeit über den Ablauf 12 abzieht, angesteuert werden. Schließlich kann im Falle einer elektronischen Füllstandskontrolle der Partikelbeladung im Sammelbehälter 13 bei Erreichen eines maximalen Füllstands eine Pumpe angesteuert werden, über die diese Partikel 46 respektive Filterkuchen 48 zusammen mit einem gewissen Anteil an im Sammelbehälter 13 ebenfalls befindlichen Schmutzwasser abgezogen werden.

## Patentansprüche

1. Filterpresse, umfassend ein eine abzutrennende Partikel (46) enthaltende, zu filtrierende Flüssigkeit aufnehmendes Gehäuse (2) sowie eine im Gehäuse angeordnete Presseinrichtung (4) zum Durchpressen der Flüssigkeit durch eine Filtereinrichtung (3), **dadurch gekennzeichnet, dass** die um eine vertikale Achse (9) rotierende Presseinrichtung (4) wenigstens ein um eine, zur vertikalen Achse (9) unter einem Winkel stehende, Drehachse (20) rotierendes, im Querschnitt rundes Presselement (5) mit einem aus einem elastischen Material gebildeten Außenmantel (18) aufweist, mit dem das Presselement (5) auf der Filtereinrichtung (3) abrollt, wobei die Filtereinrichtung (3) ein Filtermittel (39) sowie eine dem Filtermittel (39) vorgeschaltete, mehrere zum Presselement (5) hin offene Durchbrechungen (38) aufweisende Filterplatte (37) umfasst, von denen jede einen sich zum Filtermittel (39) hin reduzierenden Querschnitt aufweist.

2. Filterpresse nach Anspruch 1, **dadurch gekennzeichnet, dass** die Durchbrechungen (38) im Querschnitt rund sind.

3. Filterpresse nach Anspruch 2, **dadurch gekennzeichnet, dass** die Durchbrechungen (38) einen Öffnungswinkel (ε) zwischen 60° - 120°, insbesondere zwischen 75° - 105° und vorzugsweise von 90° aufweisen.

4. Filterpresse nach Anspruch 2 oder 3, **dadurch gekennzeichnet, dass** die Durchbrechungen (38) einen maximalen Durchmesser (d1) von 12 mm, insbesondere von 10 mm und vorzugsweise von 8 mm und einen minimalen Durchmesser (d2) von 8 mm, insbesondere von 6 mm und vorzugsweise von 5 mm aufweisen.

5. Filterpresse nach einem der vorangehenden Ansprüche, **dadurch gekennzeichnet, dass** die Filtereinrichtung (3) eine dem Filtermittel (39) nachgeschaltete zweite Filterplatte (42) mit, mit den Durchbrechungen (38) der ersten Filterplatte (37) fluchtenden, zweiten Durchbrechungen (44) aufweist, wobei vorzugsweise der Querschnitt der zweiten Durchbrechungen (44) dem minimalen Querschnitt der ersten Durchbrechungen (38) entspricht.

6. Filterpresse nach einem der vorangehenden Ansprüche, **dadurch gekennzeichnet, dass** das Filtermittel (39) ein Lochfilter (40) mit einem Lochquerschnitt zwischen 1 - 50µm, insbesondere zwischen 1 - 25µm ist oder umfasst, wobei vorzugsweise der Lochfilter (40) ein perforiertes Filterblech (41) oder eine perforierte, vorzugsweise reißfeste, Kunststofffolie ist.

7. Filterpresse nach Anspruch 6, **dadurch gekennzeichnet, dass** dem Lochfilter (40) direkt ein Filtervlies (42) nachgeschaltet ist.

8. Filterpresse nach einem der vorangehenden Ansprüche, **dadurch gekennzeichnet, dass** der Außenmantel (18) ein Belag aus einem Elastomer, einem thermoplastischen Elastomer oder einem Gummi ist.

9. Filterpresse nach Anspruch 8, **dadurch gekennzeichnet, dass** der Außenmantel (18) eine Matte ist, die an einem walzenförmigen Elementkörper (16) des Presselements (5) befestigt ist, oder dass der Außenmantel (18) eine Beschichtung ist.

10. Filterpresse nach einem der vorangehenden Ansprüche, **dadurch gekennzeichnet, dass** mehrere Presselemente (5) in Umfangsrichtung versetzt angeordnet sind und gemeinsam um die vertikale Achse (9) rotieren.

11. Filterpresse nach einem der vorangehenden Ansprüche, **dadurch gekennzeichnet, dass** das oder jedes Presselement (5) eine kegelstumpfartige Form aufweist, wobei vorzugsweise das oder jedes Presselement (5) einen Öffnungswinkel (δ) von 30° aufweist.

12. Filterpresse nach einem der vorangehenden Ansprüche, **dadurch gekennzeichnet, dass** die Filtereinrichtung (3) kegelstumpfförmig ist, wobei vorzugsweise die Filtereinrichtung (3) einen Öffnungswinkel (a) von 120° aufweist.

13. Filterpresse nach einem der vorangehenden Ansprüche, **dadurch gekennzeichnet, dass** der Filtereinrichtung (3) ein Sammelbehälter (11) für die durchgepresste Flüssigkeit (47) nachgeschaltet ist.

14. Filterpresse nach einem der vorangehenden Ansprüche, **dadurch gekennzeichnet, dass** die Filtereinrichtung (3) eine mittige Öffnung (14) aufweist, durch die die vertikale Achse (9) läuft.

15. Filterpresse nach Anspruch 14, **dadurch gekennzeichnet, dass** der Öffnung (14) der Filtereinrichtung (3) ein Sammelbehälter (13) für aus komprimierten Partikeln (46) bestehende Filterkuchen (48) nachgeschaltet ist.

16. Filterpresse nach einem der vorangehenden Ansprüche, **dadurch gekennzeichnet, dass** das oder jedes Presselement (5) über eine Spanneinrichtung (17) gegen die Filtereinrichtung (3) gespannt ist.

17. Filterpresse nach Anspruch 16, **dadurch gekennzeichnet, dass** die oder jede Spanneinrichtung (17) ein Stellzylinder (28), insbesondere ein hydraulischer oder pneumatischer Zylinder oder ein ein Federelement umfassender Zylinder ist, wobei vorzugsweise der oder jeder Stellzylinder (28) mit einem Ende (25) an einem Halter (21), an dem das Presselement (5) drehbar gelagert ist, und mit dem anderen Ende (26) an einem mit der vertikalen Achse (9) gekoppelten Halter (27) befestigt ist.

18. Filterpresse nach einem der vorangehenden Ansprüche, **dadurch gekennzeichnet, dass** die vertikale Achse (9) mittels einer über Lagerelemente (31, 36) drehbar gelagerten Welle (10) gebildet ist, die mit einem Antriebsmotor (8) gekoppelt ist und mit der das oder die Presselemente (5) gekoppelt sind.

19. Filterpresse nach Anspruch 18, **dadurch gekennzeichnet, dass** die Welle (10) mit ihrem oberen Ende aus dem Gehäuse (2) läuft und außerhalb des Gehäuses (2) mit dem Antriebsmotor (8) gekoppelt ist, und/oder dass die Welle (10) mit ihrem unteren Ende in den Sammelbehälter (13) läuft und dort drehgelagert ist.

20. Filterpresse nach einem der vorangehenden Ansprüche, **dadurch gekennzeichnet, dass** an oder in einem Gehäusebereich oberhalb der Filtereinrichtung (3) eine Füllstandskontrolleinrichtung (50), insbesondere ein Steigrohr (31) vorgesehen ist.

21. Filterpresse nach einem der vorangehenden Ansprüche und Anspruch 13, **dadurch gekennzeichnet, dass** an oder in dem die gereinigte Flüssigkeit aufnehmenden Sammelbehälter (11) eine Füllstandskontrolleinrichtung, insbesondere ein Steigrohr vorgesehen ist.

22. Filterpresse nach einem der vorangehenden Ansprüche und Anspruch 15, **dadurch gekennzeichnet, dass** an oder in dem die Filterkuchen (38) aufnehmenden Sammelbehälter (13) eine Füllstandskontrolleinrichtung vorgesehen ist.
